# EUROPÄISCHE PATENTSCHRIFT

(11) **EP 3 593 002 B1**
(45) Veröffentlichungstag und Bekanntmachung des Hinweises auf die Patenterteilung: **13.07.2022**
(21) Anmeldenummer: 18711220.6
(22) Anmeldetag: 23.02.2018
(51) Int. Cl.: F16D 13/54

(54) **KUPPLUNGSEINRICHTUNG UND HYBRIDMODUL**
CLUTCH DEVICE AND HYBRID MODULE
DISPOSITIF D'EMBRAYAGE ET MODULE HYBRIDE

(30) Priorität: 07.03.2017 DE 102017104743
(43) Veröffentlichungstag der Anmeldung: 15.01.2020
(73) Patentinhaber: Schaeffler Technologies AG & Co. KG, 91074 Herzogenaurach (DE)
(72) Erfinder: FINKENZELLER, Marc, 77723 Gengenbach (DE)
(86) Internationale Anmeldenummer: PCT/DE2018/100163
(87) Internationale Veröffentlichungsnummer: WO 2018/162001

(56) Entgegenhaltungen:
- WO-A1-2016/165701
- WO-A1-2016/184459
- WO-A1-2017/202408
- DE-A1-102015 202 039
- US-A1- 2014 353 107

## Beschreibung

Die Erfindung betrifft eine Kupplungseinrichtung sowie ein Hybridmodul mit der erfindungsgemäßen Kupplungseinrichtung. Die Kupplungseinrichtung umfasst eine Hauptkupplung mit einem Reibpaket sowie eine verschiebbare Druckeinrichtung zur Aufbringung einer Anpresskraft auf das Reibpaket. Des Weiteren umfasst die Kupplungseinrichtung ein Rampensystem zur Verschiebung der Druckeinrichtung.

Insbesondere zur Realisierung von Hybridmodulen, die den sequentiellen oder auch gleichzeitigen Betrieb eines Verbrennungsaggregats sowie einer elektrischen Maschine erlauben, werden speziell konfigurierte Kupplungseinrichtungen angewendet, mit denen die vom Verbrennungsaggregat zur Verfügung gestellte Leistung und/oder die von der elektrischen Maschine zur Verfügung gestellte Leistung auf einen Antriebsstrang übertragbar ist. Zu diesem Zweck sind derartige Kupplungseinrichtungen oftmals mit einer Vorsteuerkupplung und einer Hauptkupplung ausgerüstet. Durch Betätigung der Vorsteuerkupplung kann ein Moment erzeugt werden, welches der Schließung oder Öffnung der Hauptkupplung dient. Eine derartige Kupplungseinrichtung soll dabei bei Betrieb der elektrischen Maschine das Verbrennungsaggregat möglichst verlustfrei vom Antriebsstrang trennen. Bei Betrieb des Verbrennungsaggregates soll die Kupplung geschlossen werden können. Die Betätigung der Kupplungseinrichtung soll mit einem Minimum an Energie möglich sein. Siehe WO 2016 /165701 und US 2014 353107.

DE 10 2012 222 110 A1 offenbart diesbezüglich eine Trennkupplung für einen Hybridantrieb. Mit der Trennkupplung kann eine Brennkraftmaschine eines Fahrzeugs von einer elektrischen Maschine und einer Getriebeeingangswelle eines Fahrzeuggetriebes getrennt werden bzw. damit verbunden werden. Die elektrische Maschine kann dabei als Starter für das Anlassen der Brennkraftmaschine verwendet werden. Zu diesem Zweck wird die Trennkupplung durch einen Aktuator teilweise geschlossen. Zur Betätigung der Trennkupplung sind hier ein Planetenradgetriebe, ein Rampensystem sowie eine Wirbelstrombremse eingesetzt. Des Weiteren wird ein Freilauf als Vorsteuerelement zur Erzeugung einer Anpresskraft genutzt, mit der das Lamellenpaket der Kupplung geklemmt wird. Dieser Freilauf ermöglicht die automatische Schließung der Kupplung, im Wesentlichen ohne Zuführung weiterer Energie. Der Freilauf bedingt, dass der Verbrennungsmotor keine höhere Drehzahl erreichen kann als die elektrische Maschine bzw. der damit versehene Antriebsstrang.

In verschiedenen Betriebssituationen des Fahrzeuges ist jedoch auch eine höhere Drehzahl des Verbrennungsaggregates im Vergleich zur elektrischen Maschine bzw. des Antriebsstranges gefordert. Insbesondere besteht zwecks Minimierung der durch den Betrieb des Verbrennungsaggregates erzeugten Schadstoffe die Notwendigkeit, zur Erwärmung eines Abgas-Katalysators das Verbrennungsaggregat mit relativ hoher Drehzahl laufen zu lassen, bevor das Verbrennungsaggregat die eigentliche Antriebsleistung auf den Antriebsstrang aufbringt.

Eine weitere Anforderung an Kupplungseinrichtungen, die in Hybridmodulen anzuordnen sind, besteht selbstverständlich in der hohen Leistungsfähigkeit hinsichtlich des zu übertragenden Drehmomentes. Weiterhin ist insbesondere beim Startvorgang des Verbrennungsaggregates mittels der elektrischen Maschine gefordert, das von der elektrischen Maschine auf das Verbrennungsaggregat zu übertragende Drehmoment steuern zu können.

Ebenfalls soll die Schließung eines Drehmomentenpfades zwischen einer elektrischen Maschine und dem Verbrennungsaggregat zwecks Starten des Verbrennungsaggregats energieeffizient möglich sein, genauso wie ein sogenannter "Segelbetrieb", bei dem die kinetische Energie eines mit dem Hybridmodul ausgestatteten Fahrzeuges nicht auf das Verbrennungsaggregat übertragen wird, sowie auch eine Motorbremse, bei dem die Rotationsbewegung der KraftfahrzeugRäder auf das Verbrennungsaggregat übertragen wird, um dessen Reibung zur Erzeugung einer Bremswirkung zu nutzen.

Der Erfindung liegt daher die Aufgabe zugrunde, eine Kupplungseinrichtung sowie ein Hybridmodul zur Verfügung zu stellen, mit denen in zuverlässiger und energieeffizienter Weise ein von einem Verbrennungsaggregat aufgebrachtes Drehmoment auf einen Abtrieb bzw. auf einen Antriebsstrang sowie auch in umgekehrter Weise übertragbar ist, und welche mit geringem Bauvolumen und moderaten Herstellungskosten einen steuerbaren Startvorgang des Verbrennungsaggregates mittels der elektrischen Maschine gewährleisten.

Diese Aufgabe wird durch die erfindungsgemäße Kupplungseinrichtung nach Anspruch 1 sowie durch das erfindungsgemäße Hybridmodul nach Anspruch 10 gelöst. Vorteilhafte Ausgestaltungen der erfindungsgemäßen Kupplungseinrichtung sind in den Unteransprüchen 2 bis 9 angegeben.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die erfindungsgemäße Kupplungseinrichtung umfasst eine Hauptkupplung, die eine trockene oder nasse Kupplung in Einscheiben- oder auch Mehrscheiben-Ausführung sein kann. Diese Hauptkupplung weist ein Reibpaket sowie eine verschiebbare Druckeinrichtung, vorzugsweise als Drucktopf ausgebildet, zur Realisierung einer Anpresskraft auf das Reibpaket auf. Des Weiteren umfasst die Kupplungseinrichtung ein Rampensystem zur Verschiebung der Druckeinrichtung zwecks Kraftbeaufschlagung des Reibpaketes. Die Kupplungseinrichtung weist zudem eine Vorsteuerkupplung zwecks Momentübertragung auf das Rampensystem auf. Die Vorsteuerkupplung umfasst eine Gegenplatte sowie eine Betätigungseinrichtung zur Verschiebung der Gegenplatte. Die Vorsteuerkupplung ist durch Verschiebung der Gegenplatte öffenbar und schließbar. Die Gegenplatte ist soweit verschiebbar, dass sie eine Kraft auf die Druckeinrichtung aufbringen kann und derart die Druckeinrichtung verschieben kann. Weiterhin weist die Kupplungseinrichtung einen Innenkorb und einen Außenkorb auf, wobei das Reibpaket mechanisch mit dem Innenkorb und dem Außenkorb verbunden ist. Das Rampensystem umfasst ein an dem Innenkorb angeordnetes Rampenelement sowie ein relativ dazu verdrehbares Rampenelement, wobei das verdrehbare Rampenelement sowie die Vorsteuerkupplung bei geschlossener Vorsteuerkupplung mechanisch mit dem Innenkorb sowie dem Außenkorb verbunden sind. Das an dem Innenkorb angeordnete Rampenelement ist mit dem Innenkorb mittels eines Freilaufs verbunden, der eine Drehbewegung des Rampenelements in Bezug zum Innenkorb in einer Drehrichtung blockiert und entgegen dieser Drehrichtung frei gibt.

Die Reibkupplung ist dazu eingerichtet, ein Drehmoment von einer Abtriebswelle auf einen Verbraucher und umgekehrt zu übertragen.

Die Druckeinrichtung bringt eine Anpresskraft auf das Reibpaket auf, um derart die Lamellen des Reibpaketes zu verpressen und so die Hauptkupplung zu schließen, so dass diese ein Drehmoment von einem Verbrennungsaggregat auf einen Antriebsstrang übertragen kann.

Die Druckeinrichtung ist mit dem Rampensystem mechanisch gekoppelt. Die Übertragung des Drehmomentes, welches von einem Verbrennungsaggregat aufgebracht wird, erfolgt mittels der Vorsteuerkupplung auf das Rampensystem. Die Vorsteuerkupplung wird durch die Bewegung der Gegenplatte geöffnet bzw. geschlossen, so dass derart gesteuert werden kann, ob ein Drehmoment von einem Verbrennungsaggregat über die Vorsteuerkupplung an das Rampensystem übertragen wird oder nicht. Die zweite Funktion der Gegenplatte ist es, direkt und vorzugsweise unmittelbar eine Kraft auf die Druckeinrichtung bei Verschiebung der Gegenplatte auszuüben, so dass auch derart die Hauptkupplung geschlossen werden kann.

Unter dem genannten Freilauf ist hierbei eine nur in einer Drehrichtung wirkende Kupplungseinrichtung zu verstehen, die die Drehbewegung des Rampenelements auf den Innenkorb übertragen kann, jedoch keine Drehbewegung bzw. kein Drehmoment von dem Innenkorb in der selben Drehrichtung auf das angeschlossene Rampenelement übertragen kann.

Die Drehrichtung, in der der Freilauf das Drehmoment bzw. die Drehbewegung des Rampenelements auf den Innenkorb übertragen kann, ist hier die Drehrichtung eines an die Kupplungseinrichtung anzuschließenden Verbrennungsaggregates bzw. einer an den Innenkorb anzuschließenden elektrischen Antriebseinheit, wie zum Beispiel eines Elektromotors.

Das am Innenkorb angeordnete Rampenelement sowie das verdrehbare Rampenelement sind dabei derart konfiguriert, dass sich das verdrehbare

Rampenelement bei einer Rotationsbewegung aufgrund schräg angeordneter Rampen von dem am Innenkorb angeordneten Rampenelement entfernt oder sich diesem nähert.

Die Ausgestaltung der Kupplungseinrichtung mit dem Freilauf ermöglicht, dass derart in einfacher Weise ein Zugbetrieb realisiert werden kann, bei dem das angeschlossene Verbrennungsaggregat ein Drehmoment auf den Außenkorb der Hauptkupplung aufbringt, und unter Betätigung der Vorsteuerkupplung diese Drehbewegung bzw. dieses Drehmoment auf das Rampensystem übertragen wird, welches den Drucktopf der Hauptkupplung verschiebt und somit die Hauptkupplung schließt und derart den Innenkorb der Hauptkupplung kraftschlüssig mit dem Außenkorb der Hauptkupplung verbindet. Aufgrund der Sperrwirkung des Freilaufs kann hier das verdrehbare Rampenelement in Bezug zum mit dem Innenkorb verbundenen Rampenelement verdreht werden, sodass es zu einer axialen Entfernung der beiden Rampenelemente kommt.

Ist jedoch ein so genannter "Segelbetrieb" oder auch ein Funktionszustand zu realisieren, in dem die Abtriebsseite bzw. der Innenkorb der Kupplungseinrichtung schneller dreht als der Außenkorb bzw. ein daran angeschlossenes Verbrennungsaggregat, wie es zum Beispiel bei einer Bergab-Fahrt eines Kraftfahrzeuges auftreten kann, so erfolgt durch den Freilauf eine Lösung der rotationsfesten Verbindung zwischen Innenkorb und Rampenelement, so dass der Innenkorb schneller drehen kann als das daran angeschlossene Rampenelement sowie die damit gekoppelte Vorsteuerkupplung. Dies hat den Vorteil, dass zur Realisierung eines derartigen Betriebszustandes keine weitere Energie aufzuwenden ist, die z.B. zur Öffnung der Vorsteuerkupplung benötigt wird, um aktiv einen Drehmomentenpfad zu öffnen.

Ein weiterer Vorteil der erfindungsgemäßen Kupplungseinrichtung liegt darin, dass mit wenigen technischen Mitteln und mit nur geringem Bauvolumen mittels der Gegenplatte dosierbar eine Kraft auf die Druckeinrichtung übertragbar ist, so dass ein Drehmoment, welches z. B. durch eine elektrische Maschine erzeugt wird, in die Hauptkupplung einleitbar ist, so dass das Verbrennungsaggregat mittels des von der elektrischen Maschine zur Verfügung gestellten Drehmomentes gestartet werden kann. Die technischen Mittel zur Realisierung dieses Startprozesses, nämlich die Gegenplatte sowie die Druckeinrichtung, haben somit eine Doppelfunktion, nämlich die Übertragung eines Drehmomentes vom Verbrennungsaggregat auf einen Antriebsstrang sowie die beschriebene Funktion der Leitung eines Drehmomentes von der elektrischen Maschine an das Verbrennungsaggregat, z. B. um dieses zu starten. Demzufolge werden im Vergleich zu herkömmlichen Ausführungsformen in Hybridmodulen weniger Bauelemente sowie auch ein geringere Bauraum benötigt.

Vorzugsweise ist die Kupplungseinrichtung derart realisiert, dass die von der Gegenplatte auf die Druckeinrichtung aufbringbare Kraft unmittelbar auf die Druckeinrichtung ausübbar ist. Das bedeutet, dass in dieser Ausgestaltung der Kupplungseinrichtung die Gegenplatte an die Druckeinrichtung anpressbar ist, um diese zu verschieben. Dabei soll jedoch erfindungsgemäß nicht ausgeschlossen werden, dass etwaige dünne Zwischenschichten zwischen Gegenplatte und Druckeinrichtung vorhanden sind, wie z. B. Lackschichten oder andere Beschichtungen.

Des Weiteren ist in einer vorteilhaften Ausgestaltung der Kupplungseinrichtung vorgesehen, dass die Vorsteuerkupplung Federeinrichtungen, insbesondere Blattfedern, aufweist. Mit diesen Federeinrichtungen lassen sich die in der Vorsteuerkupplung wirkenden Kräfte definieren.

Die Betätigungseinrichtung zur Verschiebung der Gegenplatte umfasst vorzugsweise mehrere Druckstifte, die auf die Gegenplatte wirken. Mit den Druckstiften kann die Gegenplatte durch Aufbringung von Zug- und Druckkräften bewegt werden. Somit umfasst die Betätigungseinrichtung zumindest einen mechanischen Ausrücker, der elektromechanisch oder hydraulisch oder auch pneumatisch betrieben werden kann. Die Bewegung der Druckstifte wird vorteilhafterweise von wenigstens einem hydraulischen Antrieb realisiert, der mit den Druckstiften mechanisch gekoppelt ist.

Eine Reibscheibe der Vorsteuerkupplung ist ständig mit dem Außenkorb verbunden. Erst bei Schließung der Vorsteuerkupplung ist die Vorsteuerkupplung jedoch vollständig mit dem Außenkorb verbunden. Zwischen den beiden Rampenelementen können Wälzkörper, insbesondere Kugeln angeordnet sein. Die erwähnten Rampenflächen können dann Laufflächen für die Wälzkörper bilden. Vorzugsweise sind die Rampenflächen am Umfang der Rampenelemente angeordnet.

Zwecks Abstützung des von der Betätigungseinrichtung axial belasteten Innenkorbs ist vorzugsweise vorgesehen, dass sich der Innenkorb parallel zur Rotationsachse der Kupplungseinrichtung an wenigstens einem Stützlager abstützt. Dieses Stützlager bildet vorzugsweise eine Schulter aus, so dass es geeignet ist, die axialen Kräfte aufzunehmen.

Weiterhin ist zur Aufnahme der herrschenden Kräfte vorteilhafterweise zwischen dem Rampensystem, und insbesondere zwischen dem verdrehbaren Rampenelement und der Druckeinrichtung ein Axiallager angeordnet. Auch dieses Axiallager dient zur Aufnahme von axial, also parallel zur Rotationsachse verlaufenden Kräften.

Die Druckstifte der Betätigungseinrichtung sind vorzugsweise in einfacher Ausgestaltung in dem verdrehbaren Rampenelement verschiebbar gelagert.

Die damit zur Verfügung gestellte Kupplungseinrichtung kann insbesondere als Trennkupplung für einen Hybridantrieb eines Hybridfahrzeuges fungieren. Die genutzte Vorsteuerkupplung ist durch einen Aktuator in Form von Druckstiften sowie vorzugsweise einer hydraulischen Einrichtung sequentiell betätigbar. Dadurch lässt sich die Vorsteuerkupplung öffnen, um das Verbrennungsaggregat von einer elektrischen Maschine zu trennen. Das Rampensystem wird dabei im Wesentlichen lastfrei, so dass sich das verdrehbare Rampenelement relativ zum am Innenkorb angeordneten Rampenelement verdrehen kann und derart sich axial verschieben kann, so dass die damit in Wirkverbindung stehende Druckeinrichtung die Anpresskraft auf das Reibpaket der Hauptkupplung wegnimmt. Dadurch wird die Hauptkupplung geöffnet. Zwecks Starten des Verbrennungsaggregates unter Verwendung der elektrischen Maschinen wird wiederum die Betätigungseinrichtung genutzt, um direkt eine Druckkraft auf die Druckeinrichtung auszuüben. Dies führt zum Schließen der Hauptkupplung und demzufolge wieder zum Schließen des Drehmoment -Übertragungspfades zwischen dem Verbrennungsaggregat und dem Antriebsstrang. Nach erneuter Betätigung der Betätigungseinrichtung schließt diese die Vorsteuerkupplung, so dass das vom Verbrennungsaggregat zur Verfügung gestellte Drehmoment über die Vorsteuerkupplung auf das Rampensystem übertragen wird, so dass sich das verdrehbare Rampenelement wiederum verdreht und derart seinen Abstand zum fest angeordneten Rampenelement vergrößert. Dabei verschiebt das verdrehbare Rampenelement die Druckeinrichtung derart, dass diese das Reibpaket der Hauptkupplung wiederum zusammendrückt. Das Drehmoment des Verbrennungsaggregates wird demzufolge genutzt, um die Übertragung dieses Drehmomentes auf den Antriebsstrang zu realisieren.

Zur Lösung der Aufgabe wird weiterhin ein Hybridmodul zur Verfügung gestellt, welches eine erste Antriebseinheit, insbesondere in Form einer Brennkraftmaschine bzw. eines Verbrennungsaggregates aufweist, wobei diese erste Antriebseinheit eine Abtriebswelle aufweist. Des Weiteren umfasst das Hybridmodul einen Antriebsstrang mit einer mechanisch damit gekoppelten zweiten Antriebseinheit, insbesondere einer elektrischen Maschine. Das Hybridmodul umfasst die erfindungsgemäße Kupplungseinrichtung, wobei die Abtriebswelle der ersten Antriebseinheit zur Drehmomentübertragung mittels der Kupplungseinrichtung mit dem Antriebsstrang lösbar verbindbar ist. In dem Hybridmodul können die Brennkraftmaschine bzw. das Verbrennungsaggregat, die Kupplungseinrichtung, die elektrische Maschine und eine Getriebeeinheit in der genannten Reihenfolge angeordnet sein. Das Hybridmodul kann weiterhin einen Drehschwingungsdämpfer, insbesondere ein Zweimassenschwungrad, aufweisen. Der Drehschwingungsdämpfer kann einen Energiespeicher aufweisen.

Durch die erfindungsgemäße Kupplungseinrichtung des Hybridmoduls kann das Verbrennungsaggregat energieeffizient mit dem Antriebsstrang gekoppelt werden oder vom Antriebsstrang entkoppelt werden.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maß eingeschränkt sind.

Es zeigen
Figur 1: ein erfindungsgemäßes Hybridmodul mit der erfindungsgemäßen Kupplungseinrichtung in einer Schnittansicht,
Figur 2: ein Kraft-Weg-Diagramm mit Aussage über die benötigte Kraft bei Betätigung der Vorsteuerkupplung.

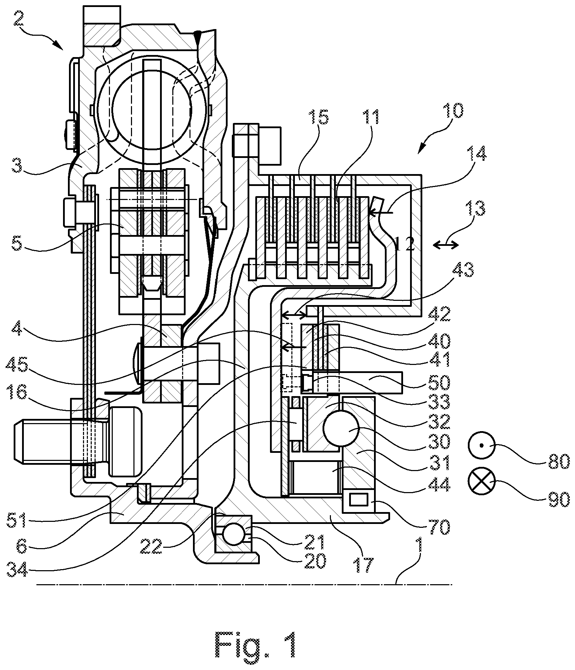

Das in Figur 1 in Schnittansicht dargestellte Hybridmodul weist ein Zweimassenschwungrad 2 auf, welches mit einem Fliehkraftpendel 5 verbunden ist. Das Zweimassenschwung 2 und das Fliehkraftpendel 5 sind mit einer Abtriebswelle 6 drehmomentfest über eine Primärseite 3 des Zweimassenschwungrads 2 verbunden. Die Abtriebswelle 6 rotiert um eine Rotationsachse 1, die zugleich die Rotationsachse des gesamten Hybridmoduls darstellt. Die Sekundärseite 4 des Zweimassenschwungrades 2 ist mechanisch fest mit einem Außenkorb 15 einer Hauptkupplung 10 verbunden. Diese Hauptkupplung 10 umfasst ein Reibpaket 11, dessen Lamellen in alternierender Anordnung mit dem Außenkorb 15 sowie dem Innenkorb 16 verbunden sind. Der Innenkorb 16 bildet eine Nabe 17 aus, die ebenfalls um die Rotationsachse 1 drehbar ist. Ein weiterer Bestandteil der Hauptkupplung 10 ist eine Druckeinrichtung 12, die hier als Drucktopf ausgebildet ist. Die Druckeinrichtung 12 ist entlang der Verschiebungsrichtung 13 verschiebbar. Durch entsprechende Verschiebung der Druckeinrichtung 12 ist diese mit einer Anpresskraft 14 auf das Reibpaket 11 drückbar, um derart die Hauptkupplung 10 zu schließen. Der Innenkorb 16 stützt sich über seine Nabe 17 an einen Stützlager 20 ab, welches eine Schulter 21 ausbildet, um axial wirkende Kräfte aufnehmen zu können.

Das Hybridmodul umfasst weiterhin ein Rampensystem 30, welches ein mittels eines Freilaufs 70 an der Nabe 17 angeordnetes festes Rampenelement 31 sowie ein dazu relativ verdrehbares Rampenelement 32 umfasst. Zwischen den Rampenelementen 31, 32 ist eine Mehrzahl von Kugeln angeordnet. Die Rampenelemente 31, 32 sind mit hier nicht extra dargestellten schräg verlaufenden Rampenflächen ausgestaltet, auf denen die Kugeln laufen. Aufgrund der Anlage der schräg verlaufenden Rampenflächen aneinander bewirkt eine Verdrehung des verdrehbaren Rampenelementes 32 eine Abstandsveränderung in Bezug zum an der Nabe 17 bzw. dem Innenkorb 16 angeordneten Rampenelement 31. Das verdrehbare Rampenelement 32 ist auf einem Axiallager 34 gelagert, welches sich in axialer Richtung an der Druckeinrichtung 12 abstützt. Zur Einstellung der Kräfte im Rampensystem 30 sind zudem Blattfedern 44 zwischen dem an der Nabe 17 bzw. dem Innenkorb 16 angeordneten Rampenelement 31 sowie der über das Rampensystem 30 verlagerbaren Druckeinrichtung 12 angeordnet.

Ein Abschnitt des verdrehbaren Rampenelementes 32 bildet einen Teil der Vorsteuerkupplung 40 aus. Diese Vorsteuerkupplung 40 umfasst neben diesem Abschnitt des verdrehbaren Rampenelementes 32 außerdem eine Reibscheibe 41 sowie eine Gegenplatte 42, die parallel zur Rotationsachse 1 verschiebbar ist und demzufolge die Reibscheibe 41 zwischen sich sowie dem verdrehbaren Rampenelement 32 mit einer derartigen Reibkraft beaufschlagen kann, dass ein Drehmoment von der Reibscheibe 41 auf das verdrehbare Rampenelement 32 und in umgekehrter Richtung übertragen werden kann. Zu diesem Zweck wird die Betätigungseinrichtung 50 in Form der dargestellten Druckstifte, die mit einer hier nicht ersichtlichen hydraulischen, elektrischen oder auch pneumatischen Antriebseinheit gekoppelt sein kann, derart betätigt, dass die Gegenplatte 42 in Richtung auf das verdrehbare Rampenelement 32 gezogen wird. Die Druckstifte der Betätigungseinrichtung 50 sind dabei in einer translatorischen Lagerung 51 in dem verdrehbaren Rampenelement 32 integriert.

Derart kann bei geschlossener Vorsteuerkupplung 40 ein in die Abtriebswelle 6 eingetragenes Drehmoment über den Außenkorb 15 in das Reibpaket 11 der Hauptkupplung 10 eingetragen werden. Aufgrund der Drehmoment-Übertragung durch die Vorsteuerkupplung 40 in das Rampensystem 30 wird das verdrehbare Rampenelement 32 derart verdreht, dass sich der Abstand in Bezug zum an der Nabe 17 bzw. dem Innenkorb 16 angeordneten Rampenelement 31 vergrößert.

Dadurch wird die Druckeinrichtung 12 nach links verlagert, sodass sie die Anpresskraft 14 auf das Reibpaket 11 aufbringt und dadurch die Hauptkupplung 10 geschlossen wird und das Drehmoment von der Abtriebswelle 6 auf den Innenkorb 16 bzw. die Nabe 17 übertragen wird.

Insofern die Vorsteuerkupplung 40 durch Betätigung der Betätigungseinrichtung 50 geöffnet wird, wird der Drehmomentpfad über die Vorsteuerkupplung 40 unterbrochen, sodass das Rampensystem 30 im Wesentlichen lastfrei ist und sich das verdrehbare Rampenelement 32 aufgrund der Wirkung von Blattfedern 44 zwischen der Druckeinrichtung 12 und dem an der Nabe 17 bzw. dem Innenkorb 16 angeordneten Rampenelement 31 wieder nach rechts verlagert, sodass auch die Anpresskraft 14 auf das Reibpaket 11 aufgehoben wird. Demzufolge wird die Hauptkupplung 10 geöffnet und es wird die Drehmomentübertragung von der Abtriebswelle 6 auf den Innenkorb 16 unterbrochen.

Bei Betrieb eines hier nicht dargestellten und mit dem Innenkorb 16 verbundenen elektrischen Antriebs sowie bei dem Ziel, mittels des elektrischen Antriebs ein mit der Abtriebswelle 6 gekoppeltes Verbrennungsaggregat zu starten, ist wie folgt vorzugehen: Die Betätigungseinrichtung 50 wird derart betätigt, dass die dargestellten Druckstifte die Gegenplatte 42 in die gestrichelt dargestellte Position nach links verschieben, sodass die Gegenplatte 42 an der Druckeinrichtung 12 anliegt und diese ebenfalls nach links verlagert, so dass sie wieder eine Anpresskraft 14 auf das Reibpaket 11 der Hauptkupplung 10 ausübt. Ein in den Innenkorb 16 von einem elektrischen Antrieb eingetragenes Drehmoment wird somit in das Reibpaket 11 der Hauptkupplung 10 eingeleitet und von dieser auf das Zweimassenschwungrad 2 und demzufolge auch auf die Abtriebswelle 6 übertragen, sodass ein hier nicht dargestelltes, an die Abtriebswelle 6 angeschlossenes Verbrennungsaggregat mit kinetischer Energie versorgt und gestartet werden kann. Bei Erreichung eines stabilen Selbstlaufs des Verbrennungsaggregats wird wiederum die Betätigungseinrichtung 50 betätigt, sodass die von ihr aufgebrachte Kraft 45 weggenommen wird und die Druckeinrichtung 12 wiederum nach rechts verlagert und die Hauptkupplung 10 geöffnet wird.

Bei weiterer Betätigung der Betätigungseinrichtung 50 in der bereits beschriebenen Art und Weise zur Schließung der Vorsteuerkupplung 40 wird das von der Abtriebswelle 6 eingetragene Drehmoment genutzt, um das Rampensystem 30 zu betätigen und derart wiederum die Druckeinrichtung 12 nach links zu verlagern, sodass sie wieder die Anpresskraft 14 auf das Reibpaket 11 der Hauptkupplung 10 ausübt und damit diese Hauptkupplung 10 schließt, sodass das von der Abtriebswelle 6 zur Verfügung gestellte Drehmoment in den Innenkorb 16 übertragen wird.

Die von der Betätigungseinrichtung 50 aufgebrachte axiale Kraft wird dabei von dem Stützlager 20 aufgenommen, welches eine entsprechende, entgegengesetzte Stützkraft 42 auf die Nabe 17 aufbringt.

Zur Einstellung der in der Vorsteuerkupplung 40 herrschenden Kräfte weist diese insbesondere zwischen der Gegenplatte 42 und der Reibscheibe 41 Blattfedern 33 auf.

Mit der erfindungsgemäßen Kupplungseinrichtung bzw. dem erfindungsgemäßen Hybridmodul kann in unbetätigtem Zustand der Vorsteuerkupplung 40 ein Verbrennungsaggregat sowohl bei Aufbringung eines Drehmoments als auch im angetriebenen Zustand energieeffizient an einen Abtriebsstrang angekoppelt werden. Das von der Vorsteuerkupplung 40 übertragene Drehmoment wird dabei von dem Rampensystem 30 in eine Axialkraft umgewandelt, mit der das Reibpaket 11 der Hauptkupplung 10 geklemmt wird.

Die von dem Rampensystem 30 generierte axiale Kraft wird von der Nabe 17 aufgenommen, sodass ein angeschlossenes Verbrennungsaggregat nicht axial belastet wird.

Es ist ersichtlich, dass unabhängig von der Richtung der Übertragung eines Drehmomentes lediglich eine Betätigungseinrichtung 50 bzw. ein Aktor notwendig ist, der auf die Druckstifte zwecks Verlagerung der Gegenplatte 42 wirkt.

Der zwischen dem Innenkorb 16 und dem Rampenelement 31 angeordnete Freilauf 70 ermöglicht aufgrund seiner Sperrwirkung in der Drehrichtung 80, dass das verdrehbare Rampenelement in Bezug zum mit dem Innenkorb verbundenen Rampenelement verdreht wird, sodass es zu einer axialen Entfernung der beiden Rampenelemente 31,32 kommt.

Mit dem Freilauf 70 kann jedoch auch ein so genannter "Segelbetrieb" oder auch ein Funktionszustand realisiert werden, in dem die Abtriebsseite bzw. der Innenkorb 16 der Kupplungseinrichtung schneller dreht als der Außenkorb 15 bzw. ein daran angeschlossenes Verbrennungsaggregat, wie es zum Beispiel bei einer Bergab-Fahrt eines damit ausgestatteten Kraftfahrzeuges auftreten kann. Dabei erfolgt eine Relativ-Rotationsbewegung des Rampenelements 31 in Bezug zum Innenkorb 16 in der entgegengesetzten Drehrichtung 90 und demzufolge durch den Freilauf 70 eine Lösung der rotationsfesten Verbindung zwischen Innenkorb 16 und Rampenelement 31, so dass der Innenkorb 16 schneller drehen kann als das daran angeschlossene Rampenelement 31 sowie die damit gekoppelte Vorsteuerkupplung 40. Dies hat den Vorteil, dass zur Realisierung eines derartigen Betriebszustandes keine weitere Energie aufzuwenden ist, um aktiv einen Drehmomentenpfad zu öffnen.

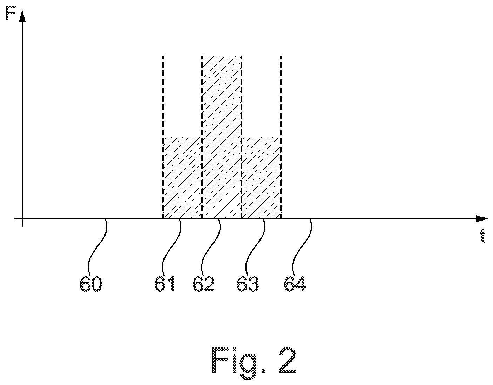

Anhand des Diagramms in Figur 2 wird die Kraft bzw. Energie verdeutlicht, die zur Realisierung der einzelnen Zustände des Hybridmoduls benötigt wird. Bei geschlossener Vorsteuerkupplung 14 zwecks Moment-Übertragung zwischen der Abtriebswelle 6 und dem Innenkorb 16, durch den dargestellten Zustand 60 verdeutlicht, ist überhaupt keine Kraft und demzufolge keine Energie aufzuwenden. Zur Öffnung der Vorsteuerkupplung 40 zwecks Unterbrechung des Drehmoment-Flusses muss eine entsprechende Kraft und demzufolge Energie aufgewendet werden. Dieser Zustand ist mit dem Abschnitt 61 gekennzeichnet.

Zur Aufbringung der von der Gegenplatte 42 auf die Druckeinrichtung 12 aufzubringende Kraft 45 muss die Betätigungseinrichtung 50 mit einer relativ hohen Kraft und demzufolge hohen Energie betätigt werden. Dieser Zustand ist mit dem Abschnitt 62 gekennzeichnet.

Nach Erzeugung eines stabilen Selbstlaufs eines angeschlossenen Verbrennungsaggregats ist die Gegenplatte 42 wieder von der Druckeinrichtung 12 zu trennen, wobei auch die von der Gegenplatte 42 auf die Druckeinrichtung 12 aufgebrachte Kraft 45 verringert wird, sodass wiederum weniger Energie notwendig ist. Dieser Zustand ist mit dem Abschnitt 63 gekennzeichnet.

Nach anschließender Schließung der Vorsteuerkupplung mittels der Betätigungseinrichtung 50 ist wiederum keine extra Kraft bzw. Energie mehr für die Moment-Übertragung erforderlich, da, wie bereits beschrieben, das vom Verbrennungsaggregat selbst erzeugte Drehmoment über das Rampensystem 30 die Schließung der Hauptkupplung 10 bewirkt. Dieser Zustand ist mit dem Abschnitt 64 gekennzeichnet.

Mit der hier vorgeschlagenen Kupplungseinrichtung sowie mit dem Hybridmodul ist in zuverlässiger Weise ein von einem Verbrennungsaggregat aufgebrachtes Drehmoment auf einen Abtrieb bzw. auf einen Antriebsstrang sowie auch in umgekehrter Weise übertragbar, wobei gewährleistet ist, dass ein mit der Kupplungseinrichtung verbundenes Verbrennungsaggregat energieeffizient mit höherer Drehzahl betrieben werden kann als eine angekoppelte elektrische Maschine, so dass ein steuerbarer Startvorgang des Verbrennungsaggregats mittels der elektrischen Maschine sowie ein drehzahlunabhängiger Betrieb des Verbrennungsaggregats durchgeführt werden kann.

### Bezugszeichenliste

- 1: Rotationsachse
- 2: Zweimassenschwungrad
- 3: Primärseite
- 4: Sekundärseite
- 5: Fliehkraftpendel
- 6: Abtriebswelle
- 10: Hauptkupplung
- 11: Reibpake
- 12: Druckeinrichtung
- 13: Verschiebungsrichtung
- 14: Anpresskraft
- 15: Außenkorb
- 16: Innenkorb
- 17: Nabe
- 20: Stützlager
- 21: Schulter
- 22: Stützkraft
- 30: Rampensystem
- 31: Rampenelement
- 32: verdrehbares Rampenelement
- 33: Blattfedern
- 34: Axiallager
- 40: Vorsteuerkupplung
- 41: Reibscheibe
- 42: Gegenplatte
- 43: Verschiebung der Gegenplatte
- 44: Blattfedern
- 45: Kraft von der Gegenplatte
- 50: Betätigungseinrichtung
- 51: Lagerung
- 60: Zustand Vorsteuerkupplung geschlossen
- 61: Zustand Vorsteuerkupplung geöffnet
- 62: Zustand Vorsteuerkupplung geschlossen
- 63: Zustand Vorsteuerkupplung geöffnet
- 64: Zustand Vorsteuerkupplung geschlossen
- 70: Freilauf
- 80: Drehrichtung
- 90: entgegengesetzte Drehrichtung

## Patentansprüche

1. Kupplungseinrichtung, die eine Hauptkupplung (10) mit einem Reibpaket (11) und einer verschiebbaren Druckeinrichtung (12) zur Realisierung einer Anpresskraft (14) auf das Reibpaket (11) aufweist, sowie ein Rampensystem (30) zur Verschiebung der Druckeinrichtung (12) umfasst, wobei
die Kupplungseinrichtung weiterhin eine Vorsteuerkupplung (40) zwecks Momentübertragung auf das Rampensystem (30) aufweist und die Vorsteuerkupplung( 40) eine Gegenplatte (42) sowie eine Betätigungseinrichtung (50) zur Verschiebung der Gegenplatte (42) umfasst und die Vorsteuerkupplung (40) durch Verschiebung der Gegenplatte (42) öffenbar und schließbar ist sowie durch Ausübung einer Kraft (45) von der Gegenplatte (42) auf die Druckeinrichtung (12) die Druckeinrichtung (12) verschiebbar ist,
und die Kupplungseinrichtung weiterhin einen Innenkorb (16) und einen Außenkorb (15) aufweist, wobei das Reibpaket (11) mechanisch mit dem Innenkorb (16) und dem Außenkorb (15) verbunden ist,
, wobei das Rampensystem (30) ein an dem Innenkorb (16) angeordnetes Rampenelement (31) sowie ein relativ dazu verdrehbares Rampenelement (32) aufweist und das verdrehbare Rampenelement (32) sowie die Vorsteuerkupplung (40) bei geschlossener Vorsteuerkupplung (40) mechanisch mit dem Innenkorb (16) sowie dem Außenkorb (15) verbunden sind,
**dadurch gekennzeichnet, dass** das an dem Innenkorb (16) angeordnete Rampenelement (31) mit dem Innenkorb (16) mittels eines Freilaufs (70) verbunden ist, der eine Drehbewegung des Rampenelements (32) in Bezug zum Innenkorb (14) in einer Drehrichtung (80) blockiert und entgegen dieser Drehrichtung (80) frei gibt.

2. Kupplungseinrichtung nach Anspruch 1, **dadurch gekennzeichnet, dass** diese derart eingerichtet ist, dass die von der Gegenplatte (42) auf die Druckeinrichtung (12) aufbringbare Kraft (45) unmittelbar auf die Druckeinrichtung (12) ausübbar ist.

3. Kupplungseinrichtung nach einem der vorhergehenden Ansprüche, **dadurch gekennzeichnet, dass** die Vorsteuerkupplung (40) Federeinrichtungen, insbesondere Blattfedern (33), aufweist.

4. Kupplungseinrichtung nach einem der vorhergehenden Ansprüche, **dadurch gekennzeichnet, dass** die Betätigungseinrichtung (50) mehrere Druckstifte umfasst, die auf die Gegenplatte (42) wirken.

5. Kupplungseinrichtung nach Anspruch 4, **dadurch gekennzeichnet, dass** die Betätigungseinrichtung einen hydraulischen Antrieb umfasst, der mit den Druckstiften mechanisch gekoppelt ist.

6. Kupplungseinrichtung nach einem der vorhergehenden Ansprüche, **dadurch gekennzeichnet, dass** der Freilauf (70) radial zwischen dem Innenkorb (16) und dem Rampenelement (31) angeordnet ist. D

7. Kupplungseinrichtung nach Anspruch 6, **dadurch gekennzeichnet, dass** sich der Innenkorb (16) parallel zur Rotationsachse (1) der Kupplungseinrichtung an einem Stützlager (20) abstützt.

8. Kupplungseinrichtung nach einem der vorhergehenden Ansprüche, **dadurch gekennzeichnet, dass** die Kupplungseinrichtung zwischen dem Rampensystem (30) und der Druckeinrichtung (12) ein Axiallager (34) aufweist.

9. Kupplungseinrichtung nach einem der Ansprüche 4 bis 8, **dadurch gekennzeichnet, dass** die Druckstifte der Betätigungseinrichtung (50) in dem verdrehbaren Rampenelement (32) verschiebbar gelagert sind.

10. Hybridmodul, aufweisend eine erste Antriebseinheit, insbesondere eine Brennkraftmaschine, mit einer Abtriebswelle (6), einen Antriebsstrang mit einer mechanisch damit gekoppelten zweiten Antriebseinheit, insbesondere einer elektrischen Maschine, und eine Kupplungseinrichtung nach einem der vorhergehenden Ansprüche, wobei die Abtriebswelle (6) zur Drehmomentübertragung mittels der Kupplungseinrichtung mit dem Antriebsstrang lösbar verbindbar ist.

## Claims

1. A clutch device, having a main clutch (10) with a friction pack (11) and a displaceable pressure device (12) for applying a contact pressure (14) to the friction pack (11), as well as a ramp system (30) for displacing the pressure device (12), wherein
the clutch device also has a pilot clutch (40) for the purpose of torque transmission to the ramp system (30) and the pilot clutch (40) comprises a counter-plate (42) and an actuating device (50) for displacing the counter-plate (42) and the pilot clutch (40) can be opened and closed by displacing the counter-plate (42) and the pressure device (12) can be displaced by the counter-plate (42) exerting a force (45) on the pressure device (12), and the clutch device also has an inner cage (16) and an outer cage (15), wherein the friction pack (11) is mechanically connected to the inner cage (16) and the outer cage (15),
wherein the ramp system (30) has a ramp element (31) arranged on the inner cage (16) and a ramp element (32) that can be rotated relative thereto, and the rotatable ramp element (32) and the pilot clutch (40), when the pilot control clutch (40) is closed, are mechanically connected to the inner cage (16) and the outer cage (15),
**characterised in that** the ramp element (31) arranged on the inner cage (16) is connected to the inner cage (16) by means of a free wheel (70) which blocks a rotational movement of the ramp element (32) in relation to the inner cage (14) in one direction of rotation (80) and allows rotational movement against this direction of rotation (80).

2. The clutch device according to Claim 1, **characterised in that** the same is set up in such a way that the force (45) which can be applied by the counter-plate (42) to the pressure device (12) can be exerted directly on the pressure device (12).

3. The clutch device according to one of the preceding claims, **characterised in that** the pilot clutch (40) has spring devices, in particular flat springs (33).

4. The clutch device according to one of the preceding claims, **characterised in that** the actuating device (50) comprises several pressure pins which act on the counter-plate (42).

5. The clutch device according to Claim 4, **characterised in that** the actuating device comprises a hydraulic drive which is mechanically coupled to the pressure pins.

6. The clutch device according to one of the preceding claims, **characterised in that** the free wheel (70) is arranged radially between the inner cage (16) and the ramp element (31). D

7. The clutch device according to Claim 6, **characterised in that** the inner cage (16) is supported on a support bearing (20) parallel to the axis of rotation (1) of the clutch device.

8. The clutch device according to one of the preceding claims, **characterised in that** the clutch device has an axial bearing (34) between the ramp system (30) and the pressure device (12).

9. The clutch device according to one of Claims 4 to 8, **characterised in that** the pressure pins of the actuating device (50) are slidably mounted in the rotatable ramp element (32).

10. A hybrid module, having a first drive unit, in particular an internal combustion engine, with an output shaft (6), a drive train with a second drive unit mechanically coupled thereto, in particular an electrical machine, and a clutch device according to one of the preceding claims, wherein the output shaft (6) for torque transmission can be releasably connected to the drive train by means of the clutch device.

## Revendications

1. Dispositif d'embrayage, comprenant un embrayage principal (10) avec un paquet de disques de friction (11) et un dispositif de pression (12) déplaçable pour la génération d'une force de pression (14) sur le paquet de disques de friction (11), ainsi qu'un système de rampe (30) pour le déplacement du dispositif de pression (12),
le dispositif d'embrayage comportant également un embrayage pilote (40) pour la transmission d'un couple au système de rampe (30) et l'embrayage pilote (40) comprenant une contre-plaque (42) et un dispositif d'actionnement (50) pour le déplacement de la contre-plaque (42) et l'embrayage pilote (40) pouvant être ouvert et fermé par le déplacement de la contre-plaque (42) et le dispositif de pression (12) pouvant être déplacé par l'exercice d'une force (45) à partir de la contre-plaque (42) sur le dispositif de pression (12) et le dispositif d'embrayage comprenant également un panier intérieur (16) et un panier extérieur (15), le paquet de disques de friction (11) étant relié mécaniquement au panier intérieur (16) et au panier extérieur (15),
le système de rampe (30) comprenant un élément de rampe (31) disposé sur le panier intérieur (16) et un élément de rampe (32) pouvant être pivoté par rapport à celui-ci et l'élément de rampe (32) pouvant être pivoté et l'embrayage pilote (40) étant reliés mécaniquement au panier intérieur (16) et au panier extérieur (15) lorsque l'embrayage pilote (40) est fermé,
**caractérisé en ce que** l'élément de rampe (31) disposé sur le panier intérieur (16) est relié au panier intérieur (16) au moyen d'une roue libre (70) qui bloque un mouvement de rotation de l'élément de rampe (32) dans un sens de rotation (80) par rapport au panier intérieur (14) et le libère dans le sens inverse à ce sens de rotation (80).

2. Dispositif d'embrayage selon la revendication 1, **caractérisé en ce qu'** il est agencé de manière à ce que la force (45) susceptible d'être appliquée à partir de la contre-plaque (42) sur le dispositif de pression (12) puisse s'exercer directement sur la dispositif de pression (12).

3. Dispositif d'embrayage selon l'une quelconque des revendications précédentes, **caractérisé en ce que** l'embrayage pilote (40) comporte des dispositifs à ressort, notamment des ressorts à lames (33).

4. Dispositif d'embrayage selon l'une quelconque des revendications précédentes, **caractérisé en ce que** le dispositif d'actionnement (50) comprend une pluralité d'axes de pression qui agissent sur la contre-plaque (42).

5. Dispositif d'embrayage selon la revendication 4, **caractérisé en ce que** le dispositif d'actionnement comprend un entraînement hydraulique qui est couplé mécaniquement aux axes de pression.

6. Dispositif d'embrayage selon l'une quelconque des revendications précédentes, **caractérisé en ce que** la roue libre (70) est disposée radialement entre le panier intérieur (16) et l'élément de rampe (31). D

7. Dispositif d'embrayage selon la revendication 6, **caractérisé en ce que** le panier intérieur (16) prend appui sur un palier d'appui (20) parallèle à l'axe de rotation (1) du dispositif d'embrayage.

8. Dispositif d'embrayage selon l'une quelconque des revendications précédentes, **caractérisé en ce que** le dispositif d'embrayage comporte un palier axial (34) entre le système de rampe (30) et le dispositif de pression (12).

9. Dispositif d'embrayage selon l'une quelconque des revendications 4 à 8, **caractérisé en ce que** les axes de pression du dispositif d'actionnement (50) sont montés de manière déplaçable dans l'élément de rampe (32) pouvant être pivoté.

10. Module hybride, comportant une première unité d'entraînement, en particulier un moteur à combustion interne, avec un arbre de sortie (6), une chaîne cinématique avec une seconde unité d'entraînement couplée mécaniquement à celle-ci, en particulier une machine électrique et un dispositif d'embrayage selon l'une quelconque des revendications précédentes, l'arbre de sortie (6) pouvant être relié de manière amovible à la chaîne cinématique au moyen du dispositif d'embrayage pour la transmission d'un couple.
